Europäisches Patentamt

European Patent Office

Office européen des brevets

(11) Publication number: **0 271 165 B1**

# EUROPEAN PATENT SPECIFICATION

(45) Date of publication of patent specification: **13.04.94**  (51) Int. Cl.⁵: **H01J 29/28**

(21) Application number: **87202446.8**

(22) Date of filing: **08.12.87**

(54) **Projection television system and display tubes for use therein.**

(30) Priority: **10.12.86 GB 8629552**

(43) Date of publication of application:
**15.06.88 Bulletin 88/24**

(45) Publication of the grant of the patent:
**13.04.94 Bulletin 94/15**

(84) Designated Contracting States:
**DE ES FR GB IT NL**

(56) References cited:
**GB-A- 1 199 006**
**GB-A- 2 149 203**
**JP-A-61 273 837**

(73) Proprietor: **N.V. Philips' Gloeilampenfabrieken**
**Groenewoudseweg 1**
**NL-5621 BA Eindhoven(NL)**

(72) Inventor: **Vriens, Leendert**
**c/o INT. OCTROOIBUREAU B.V.**
**Prof. Holstlaan 6**
**NL-5656 AA Eindhoven(NL)**
Inventor: **Spruit, Johannes Hendrikus Maria**
**c/o INT. OCTROOIBUREAU B.V.**
**Prof. Holstlaan 6**
**NL-5656 AA Eindhoven(NL)**
Inventor: **Clarke, John Alfred**
**c/o INT. OCTROOIBUREAU B.V.**
**Prof. Holstlaan 6**
**NL-5656 AA Eindhoven(NL)**

(74) Representative: **Koppen, Jan et al**
**INTERNATIONAAL OCTROOIBUREAU B.V.**
**Prof. Holstlaan 6**
**NL-5656 AA Eindhoven (NL)**

**Description**

The present invention relates to a projection television system comprising projection television display tubes having curbed faceplates, one or more of the tubes having, on the inside surfaces of their respective faceplates, an interference filter.

Existing projection television systems are regarded as having a moderate brightness on the projection screen; a poor chromaticity due to the commonly used Tb activated green phosphors because the contribution of the orange and red spectral lines is too large for these phosphors; a loss in resolution on the projection screen due to chromatic aberration of the lenses, especially for the commonly used green (Tb-activated) and blue (ZnS:Ag) phosphors; and a moderate contrast.

In order to mitigate these problems it has been proposed for example in European Patent Publication 0170320 (PHN 11.106) to provide interference filters between the phosphor layer and the glass faceplate. These interference filters transmit light of a desired wavelength in forward and near forward directions. At larger angles, up to 90 degrees to the faceplate normal, the interference filter reflects the light of this wavelength. This light is rescattered in the phosphor layer and does have a chance to leave the tube at a small angle to the faceplate normal, resulting in a gain in brightness in the near forward directions. At smaller wavelengths the filters transmit light up to larger angles, so that the relative gain in brightness in the forward direction becomes lower. At longer wavelengths the filter transmits the light up to smaller angles, or even blocks the light in forward direction. As the filter works colour selectively, the chromaticity improves and the chromatic aberration due to projection lenses reduces.

At large focal length lenses, that is those where the focal length is greater than the diagonal of the scanned phosphor area on the faceplate, for example 130 mm for a 5" (125 mm) diagonal scanned area and 180 mm for a 7" (175mm) diagonal scanned area, the entrance pupil of the lens is relatively far away from the phosphor layer, and therefore the acceptance angles of the lens are relatively small, even in the corner of the faceplate. However, if one uses a closed rear projector, there is a trend to use smaller focal length lenses (down to half of the diagonal of the tube faceplate), in order to keep the cabinet size acceptable. The entrance pupil of these lenses is closer to the faceplate, which results in an increase of the lens acceptance angles for light from the corners of the faceplate. Using the same type interference filter as has been used previously with the larger focal length lenses results in:

a) An unacceptable drop in brightness going from the centre to the corner of the projection screen, because the interference filter reflects the light of the desired wavelength at these large angles. This drop in brightness comes on top of the normal drop in brightness due to the obliquity of the principal ray with respect to the faceplate normal and due to vignetting by the lens elements.

b) A colour shift over the projection screen, because the filters work colour selectively. A shift to the shorter wavelengths (blue) will occur on the screen, going from the centre to the corners.

One way of mitigating these problems is to use an interference filter which transmits light up to larger angles. However, the gain in brightness is then much smaller, and a colour shift will still occur. It has been disclosed in Japanese Patent Application JP-A-61-273837 to use a projection TV tube with an interference filter and a curved faceplate. In this way the angles to the faceplate normal tilt over to match the lens acceptance angles. The smallest radius of faceplate curvature to be practical is expected to be about 2.5 to 3 times the diagonal of the scanned phosphor area on the faceplate. At smaller radii problems occur with dynamic focusing of the electron beam, filter deposition, phosphor deposition and corrections in the deflection of the electron beam due to picture distortion. This means that with the small focal length lenses (< 0.75 times the diagonal of the scanned phosphor area on the faceplate), which enable systems to be built into the desired small cabinet sizes, the problems due to the too large acceptance angles of the lens still occur.

An examination of the gains in luminance and chromaticity achieved by using short focal length lenses with display tubes having curved faceplates on which are deposited interference filters having dielectric layers with substantially constant thickness over the faceplate area shows that the gains at the centre for filters having relatively low cut-off angles is greater than for filters having relatively high cut-off angles whereas the situation was substantially the opposite at the corners. Although there is invariably a lower light output from the corners of the screen compared to the centre it is desired to reduce the differential between them.

According to one aspect of the present invention there is provided a projection television display tube comprising an envelope having an optically transparent faceplate, the internal surface of the faceplate being convex as viewed from the interior of the envelope, a cathodoluminescent screen on the internal surface of the faceplate and a multilayer interference filter between its cathodoluminescent screen and the faceplate, the filter comprising at least 6 layers each having at its centre an optical thickness nxd, wherein n is the

2

refractive index of the material of the layer and d is the thickness, the optical thickness of the individual layers being between $0.2\lambda_f$ and $0.3\lambda_f$, the average optical thickness throughout the multilayer stack being $0.25\lambda_f$, wherein $\lambda_f$ is equal to $p \times \lambda$, where $\lambda$ is the desired central wavelength which is selected from the spectrum emitted by the luminescent material and p is a number between 1.18 and 1.32, characterized in that the cut-off angle is greater at the corners than at the centre.

According to another aspect of the present invention there is provided a projection television system including three projection television display tubes respectively having cathodoluminescent screens luminescing in different colours, focusing lens means associated with each display tube and a viewing screen on which the images on the display tube screens are merged to form a multicoloured image, wherein each tube has a faceplate which is convex as viewed from inside the envelope, at least one display tube has a multilayer interference filter between its cathodoluminescent screen and its faceplate, the filter comprising at least 6 layers each having at its centre an optical thickness nxd, wherein n is the refractive index of the material of the layer and d is the thickness, the optical thickness of the individual layers of the filter being between $0.2\lambda_f$ and $0.3\lambda_f$, the average optical thickness throughout the multilayer stack being $0.25\lambda_f$, wherein $\lambda_f$ is equal to $p \times \lambda$, where $\lambda$ is the desired central wavelength which is selected from the spectrum emitted by the luminescent material and p is a number between 1.18 and 1.32, and wherein the cut-off angle is greater at the corners than at the centre.

A convenient way to vary the cut-off angle is to vary the thickness of the filter layers so that they are thicker at the corners than at the centre.

The thickness variation may be substantially the same for successive layers yielding a proportional variation of p and $\lambda_f$. The variation in thickness and thus of p and $\lambda_f$ may increase progressively from the centre to the corners.

In one embodiment of the invention the internal surface of the faceplate is substantially spherical. In another embodiment of the invention, the internal surface of the faceplate is aspherical such that the curvature at and near the centre is greater than or less than the curvature at a larger distance from the centre. It is possible that the curvature may disappear (that is become infinite) at some parts of the faceplate.

When the convex faceplate has a rectangular profile, with a shorter y-axis and a longer x-axis, then a smaller layer thickness at the ends of the y-axis (y max) than at the centre may be tolerated as long as the layer thicknesses at the ends of the x-axis (x max) and in the diagonal corners are greater than at the centre.

In another embodiment the variation in the thickness of the layers, relative to their thickness at the centre, is such that the thickness at the ends of the shorter y-axis (y max) is smaller than at the centre and the thickness at the ends of the longer x-axis (x max) and at the ends of the diagonals is greater than at the centre, and wherein the layer thickness at the ends of the diagonals is less than the thickness at x max.

Another way of varying the cut-off angle would be to vary slightly the refractive index of each layer between the centre and the corners of the faceplate and maintaining the actual thickness of the layer constant. The net result would be that the optical thickness of the layer changes in accordance with the change in refractive index. In practice however it will be much more difficult to realize a refractive index variation in a layer than to vary its layer thickness.

A further way of varying the cut-off angle would be to alter both the actual thickness of each layer between the centre and the edge and also to vary slightly the refractive index between the centre and the corners. Both measures together would produce a desired change in the optical thickness. This latter method is more realistic than the previous method of only varying the refractive index. Oblique evaporation in a planetary type of evaporation apparatus may for instance result in a slight variation in refractive index over the faceplate area.

Embodiments of the present invention have interference filters with at least 6 layers. This however gives only a marginal gain which can be improved by having a greater number of layers. A filter having 9 layers has a performance which is significantly better than a filter with 6 layers and an even better performance is obtainable by interference filters having more than 13 layers, for example between 14 and 30 layers.

According to a further aspect of the present invention there is provided a method of producing a multilayer interference filter on a convex surface of a substantially rectangular faceplate, the thickness of each layer being greater at x max and in the corners than at the centre, comprising mounting the faceplate on a rotatable calotte, evaporating a filter material at angles smaller than ± 15° to the perpendicular to the convex surface onto the faceplate, the calotte being rotated, and varying the deposition of evaporated material onto the faceplate by selective masking so that the layer thickness increases with increasing x, with x = 0 at the centre of the faceplate.

The variation in thickness may thus be obtained by intermittently masking a predetermined area of the convex surface of the faceplate, in particular the central area, as the faceplate is rotated relative to the evaporation sources.

According to yet another aspect of the present invention there is provided a method of producing a multilayer interference filter on a convex surface of a substantially rectangular faceplate, the thickness of each layer being greater at the corners than at the centre, comprising obliquely evaporating a filter material onto the convex surface of the faceplate as it is rocked substantially continuously, the distance from the electron gun to the centre of the faceplate being greater than that to the adjacent corner of the faceplate.

The rocking motion may be imparted to the faceplate by rotating the faceplate in a substantially planetary manner relative to the electron beam evaporation source.

It is known to vacuum evaporate a multilayer interference filter comprising alternate high and low refractive index layers on to the concave surface of parabolic cold light mirrors. In British Patent Specification 1088629 the vacuum evaporation of the filter material on to rotating mirrors is substantially normal. British Patent Specification No. 1199006 discloses obliquely evaporating material onto planetary rotated mirrors in order to obtain a greater layer thickness at the edge than at the centre. However neither of these specifications disclose how to evaporate variable thickness filter layers onto a convex surface.

The present invention will now be described, by way of example, with reference to the accompanying drawings, wherein:

Figure 1 is a diagrammatic view of an embodiment of one type of a projection television system made in accordance with the present invention,

Figure 2 is a diagrammatic view of part of an embodiment of another type of a projection television system having three orthogonally disposed projection television tubes, the light outputs from which tubes are combined with the aid of dichroic mirrors,

Figure 3 is a diagrammatic cross-sectional view of a faceplate and screen structure,

Figure 4 is a further enlarged view of a faceplate and screen structure illustrating the operation of a multilayer interference filter,

Figure 5 illustrates the effect of an interference filter on the spectral characteristics of a terbium activated phosphor,

Figures 6 and 7 show the gains in screen luminance obtained by using interference filters with different focal length lenses,

Figure 8 illustrates the improved gain curve obtained by varying the cut-off angle across the filter layers,

Figure 9 is a diagram illustrating one method by which the thickness of filter layers, and thereby the cut-off angles, can be varied,

Figure 10 is a diagrammatic view of one possible apparatus for implementing the method illustrated in and described with reference to Figure 9,

Figure 11 is a diagram illustrating the principle of another method by which the thickness of filter layers, and thereby the cut-off angles, can be varied, and

Figure 12 is a diagrammatic view of an apparatus for implementing the method illustrated in and described with reference to Figure 11.

In the drawings the same reference numerals have been used to indicate corresponding features.

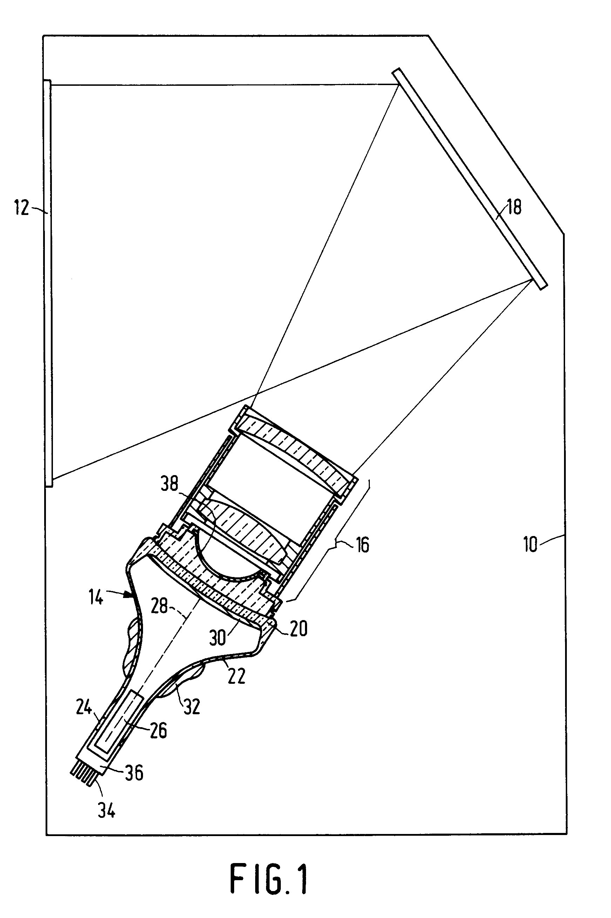

The projection system illustrated in Figure 1 comprises a cabinet 10 having a viewing screen 12 mounted in the upper part of its front wall. In the lower part of the cabinet 10 three adjacently mounted projection television tubes 14 are provided, only one of which is shown in the drawing. The cathodoluminescent phosphors of the tubes 14 emit respectively red, green and blue light. The light produced by each tube is focused by means of a short focal length lens arrangement 16 onto the screen 12, the light from the lens 16 being reflected onto the screen 12 by an inclined mirror 18. The longitudinal axes of the three tubes 14 are inclined relative to each other so that the projected images from the tubes merge at the screen 12 to form a coloured image.

Each tube 14 comprises an envelope formed by a curved faceplate 20, a cone 22 and a neck 24. The faceplate 20 is of substantially rectangular form with rounded-off corners, when viewed in elevation and is proportioned so that it can display for example the customary 4 units wide by 3 units high television image or possible high definition television images 5 or 5.33 units wide by 3 units high. Viewed from inside the envelope, the internal surface of the faceplate 20 is convex for example spherically convex with a radius of curvature, rc, of 350 mm.

Within the envelope is provided an electron gun 26 which produces an electron beam 28 which is scanned over a cathodoluminescent screen 30 applied to the interior of the faceplate 20 by means of an electromagnetic deflection yoke 32 mounted externally of the envelope at the neck 24/cone 22 transition. Electrical connections to the electron gun 26 are by way of pins 34 mounted in an end cap 36 hermetically sealed to the neck. A negative lens 38 is mounted near the external surface of the faceplate 20. The negative lens 38 functions as a field corrector and may have spherical or aspherical surfaces. The lens may be solid or part of it may be liquid to form a contacting or cooling medium. Although attached to the faceplate the lens actually forms part of the lens 16.

Optionally the projection lens arrangement 16 (Figure 1) may comprise aspheric lens elements.

The projection television system according to Figure 1 is compact. The focal length, f, of the lens arrangement 16, the radius of curvature, rc, of the faceplate and the diagonal or diameter, D, of the scanned phosphor area are related as follows: f + 10000/rc < D, the values of f, rc and D being in millimetres.

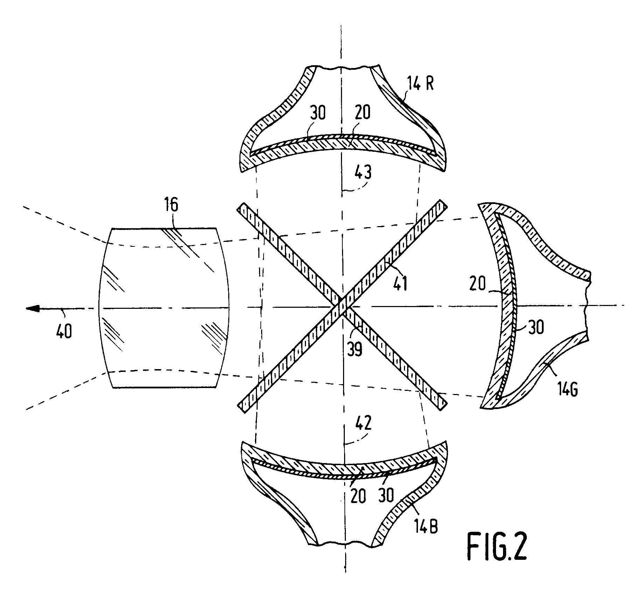

Figure 2 shows the curved faceplates of three orthogonally arranged projection television tubes 14R, 14G and 14B, ligth from these three tubes is combined and projected through an aspherical lens arrangement 16. In combining the light, the light rays of the blue tube 14B are reflected by a dichroic mirror 39 inclined at an angle of 45° with axis 40. The rays of the red tube 14R are reflected by a dichroic mirror 44, which likewise is inclined at an angle 45° with axis 40. The rays of the green tube 14G are passed by the blue and red light reflecting mirrors 39 and 41. The light rays combined in this manner are projected onto a projection screen 12 (not shown) by means of the aspherical lens arrangement 16, and a colour image is formed on said screen. The optical axes 42 and 43 of the tubes 14B and 14R coincide and are coplanar with the optical axis 40 of tube 14G. The optical axis 40 is perpendicular to the axes 42 and 43 and also constitutes the optical main axis of the system.

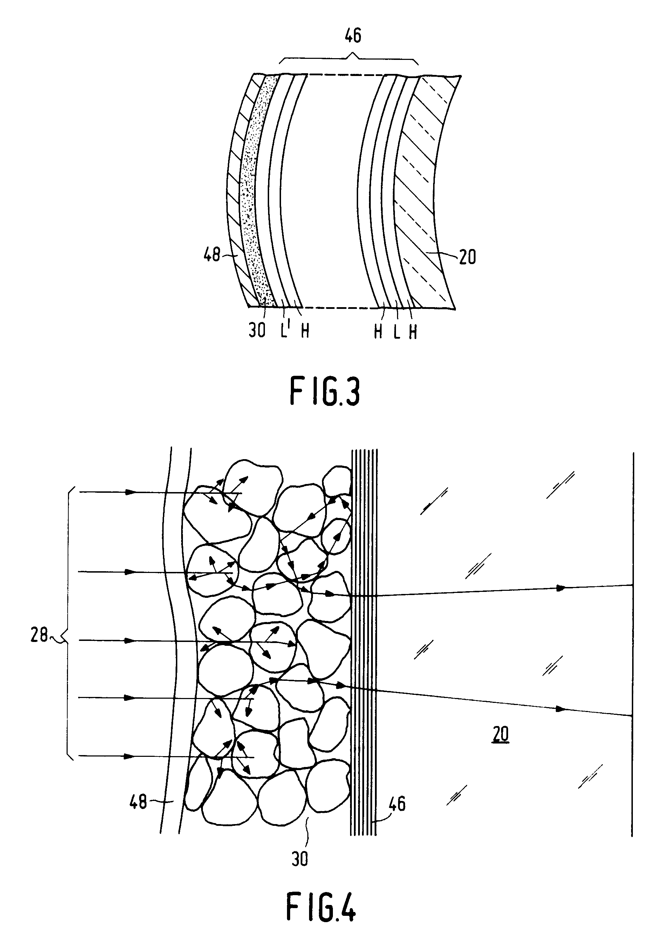

Figure 3 illustrates a cross-sectional view, not to scale, of a part of the faceplate structure of the tubes 14 (Figure 1) and 14B, 14G, 14R (Figure 2). The structure comprises the curved faceplate 20 on the internal surface of which is applied a multilayer interference filter 46. The cathodoluminescent phosphor screen 30 is applied as a layer to the filter 46 and a thin aluminium film 48, frequently termed the aluminium backing, is applied to the phosphor layer.

The general structure and the optical characteristics of the interference filter 46 are known from, for example, European Patent Publication 0 170 320 (PHN 11.106) and published British Patent Application GB-A-2 176 048 (PHQ 85.007). However, in the type of interference filters disclosed previously, the thickness of each filter layer is substantially constant over its entire area although the thickness of adjacent layers may vary. In embodiments of the display tube made in accordance with the present invention, the optical thickness, and hence is the values of p and $\lambda_f$, and also the actual thickness, of each filter layer is greater at the corners by between 1% and 6% than at the centre.

The interference filter 46 is composed of at least 6 layers, more typically between 14 to 30 layers, for example 20 layers. Alternate layers comprise a material having a high (H) refractive index (n) and a material having a low (L) refractive index. The high refractive index material can be $TiO_2$ (n = 2.35), $Ta_2O_5$ (n = 2.0) or $Nb_2O_5$ (n = 2.15) and the low refractive index material can be $SiO_2$ (n = 1.47) or $MgF_2$ (n = 1.38). The optical thickness (nxd), where d is the actual thickness, is betwen $0.2 \lambda_f$ and $0.3 \lambda_f$, typically between $0.23 \lambda_f$ and $0.27 \lambda_f$, where $\lambda_f$ is the central wavelength of the filter 46. $\lambda_f$ is equal to p x λ, where λ is the desired central wavelength selected from the spectrum emitted by the cathodoluminescent material and p is a number between 1.18 and 1.36. The average optical thickness of the layers is $0.25\lambda_f$. On a frequency scale $1/\lambda_f$ corresponds to the centre of the reflection band with perpendicular incidence of the light. The filter 46 may have a low refractive index terminating layer $L'$ which has a thickness of the order of $0.125 \lambda_f$.

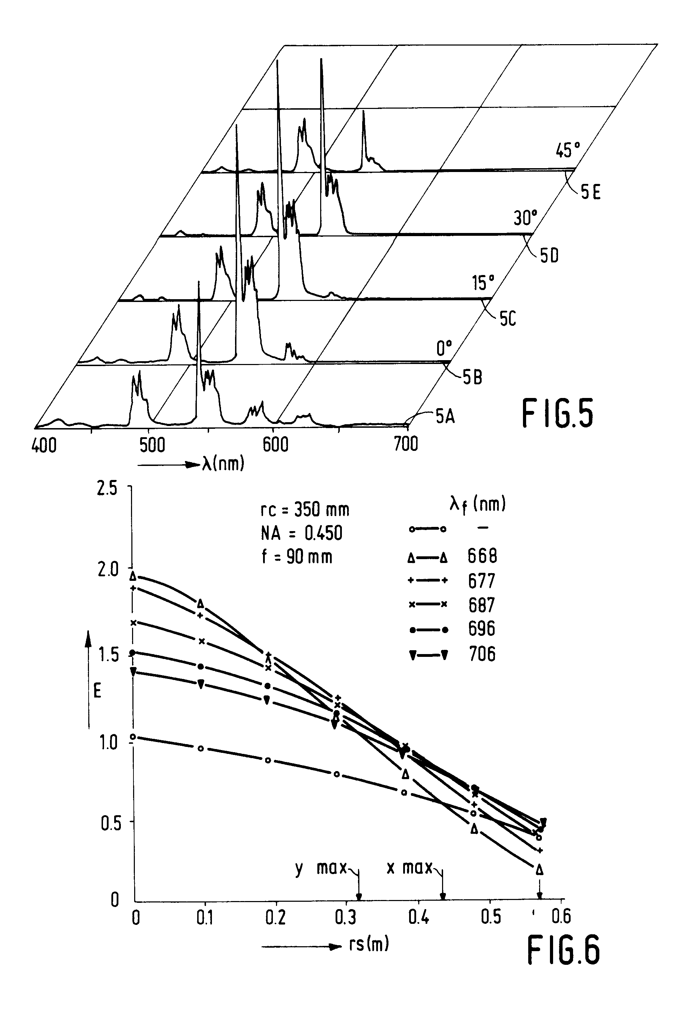

Figure 4 illustrates the operation of the filter 46. The filter 46 behaves as a small angle pass filter in respect of the fact that light incident at angles up to say 35° to the normal is transmitted by the filter 46 whereas light incident at grater angles is reflected internally within the phosphor layer 30. If this light is incident again on filter 46 it may be transmitted provided it is incident within the permitted angular range. Consequently the filter 46 provides a positive gain in luminance on the projection screen 12. Another characteristic of the interference filter 46 is that the passband characteristic shifts to lower wavelengths the greater the angle of incidence of the light. Both these effects are illustrated in Figure 5 which shows the spectrum of a terbium activated green phosphor material. The phosphor characteristic 5A illustrates the situation when no filter is present. This characteristic spectrum is almost independent of the emission angle. The purity of the green light emitted will be affected by the presence of light in the red and blue parts of the wavelength spectrum. Characteristics 5B, 5C, 5D and 5E illustrate the effect of the presence of an interference filter on light emitted by the phosphor layer and incident on the filter at 0°, 15°, 30° and 45° with respect to the normal to the filter, respectively. A comparison of characteristics 5A to 5E confirms the increase in gain by the presence of the filter 46 and the enhanced purity of the spectrum. The enhanced colour purity leads to a considerably reduced chromatic aberration in imaging on the projection screen.

Different optical thicknesses of the filter layers, including choosing different values for p and $\lambda_f$ change what is termed the filter cut-off angle, the filter cut-off angle being the incident light angle at which the filter transmission has decreased to 50%. The effect of these changes is illustrated in Figure 6 which shows the illuminance (E) distribution on the projection screen 12 from the centre (rs = 0) to the outer diagonal corners (rs = 0.57 metres), the lens focal length, f, being equal to 90 mm and the numerical aperture being 0.450, the scanned phosphor area of the display tube faceplate having a diagonal of 125 mm and the radius of curvature (rc) of the internal spherical surface of the faceplate 20 being 350 mm. In Figure 6, illuminance produced without the use of an interference filter is indicated by circles and the light output has been normalised to unit illuminance at the centre, rs = 0. The five other curves relate to $TiO_2/SiO_2$ modified quarter-wave 20-layer interference filters with p-values of 1.228, 1.244, 1.263, 1.279 and 1.298 and corresponding cut-off angles (where the filter transmittance is 50%) of 27°, 32°, 37°, 41° and 46°. For the green Tb line with a principal wavelength, $\lambda$ = 544 nm, the respective values of $\lambda_f$ (= px$\lambda$) are 668, 677, 687, 696 and 706 nm. A comparison of these shows that the smaller the cut-off angle then the higher is the gain at the centre but the situation is substantially the reverse at the corners although there is a general equality amongst the larger cut-off angle filters at the corner.

When shorter focal length lenses are used with the same size display tube to project on to the same size viewing screen, both the distance from the display tube to the lens entrance pupil and the distance from the lens exit pupil to the viewing screen become smaller, thus leading to a more compact cabinet. The decrease in the distance from display tube faceplate to lens entrance pupil also increases the tilt in the acceptance angles of the lens. The angular cut-off of the interference filter then more severely limits the light being collected from off-centre parts of the phosphor layer, leading to less gain in the corners and producing a colour shift which in the case of a green terbium activated phosphor is towards the blue part of the spectrum.

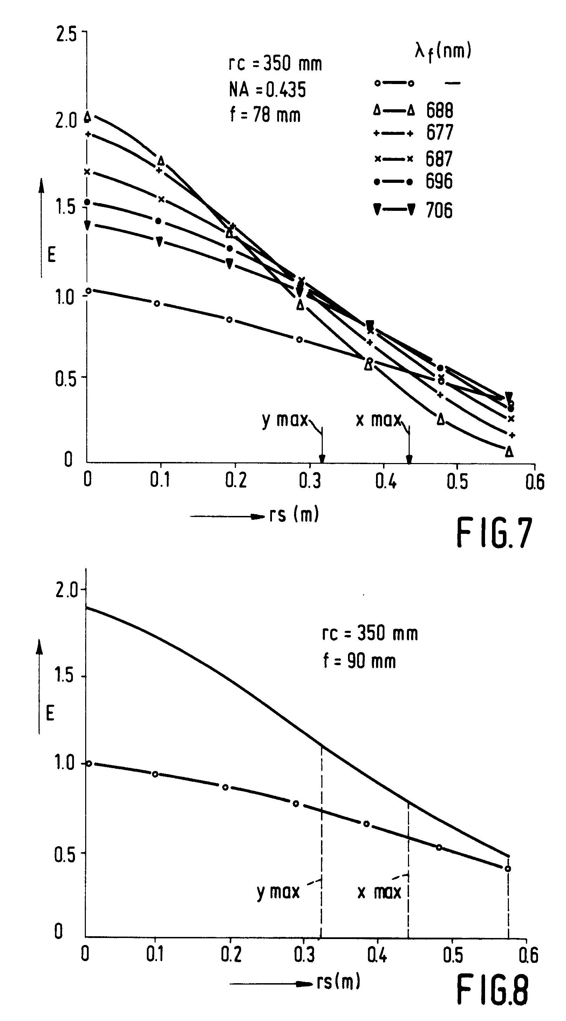

For a shorter focal length lens (f = 78mm) Figure 7 shows indeed that, when the same filters are used as in Figure 6, the corner illumination on the projection screen is reduced. The feature remains that the filter with the smallest of the cut-off angles ($\lambda_f$ = 668 mm) has the highest gain at the centre and the least gain in the corners at that this least gain is more pronounced for the shorter focal length lens. The filter with the largest of the cut-off angles ($\lambda_f$ = 706) enables an acceptable corner illumination to be obtained at the expense of decreased illumination at the centre.

The display tube made in accordance with the present invention provides a projection display tube in which the filter cut-off angle smoothly varies with increasing distance from the centre and is greater at the corner than at the centre. This is made possible by the optical thickness of filter layers being greater at the corners than at the centre. The percentage change in optical thickness of the filter layers should be substantially the same for all the filter layers leading to a corresponding change in cut-off angle. A filter can be optimised by making the cut-off angle at the centre between 3° and 16° smaller than in the corners, which corresponds to an increase in thickness from the centre to the corners of between about 1% and 5%.

The change in the optical thickness of the filter layers can be achieved in a number of ways. Firstly to vary the actual thickness of each filter layer so that it is greater at the corners of the faceplate than at the centre, the refractive index of the filter layer material being constant. Secondly to vary both the layer thickness and the refractive index of the material.

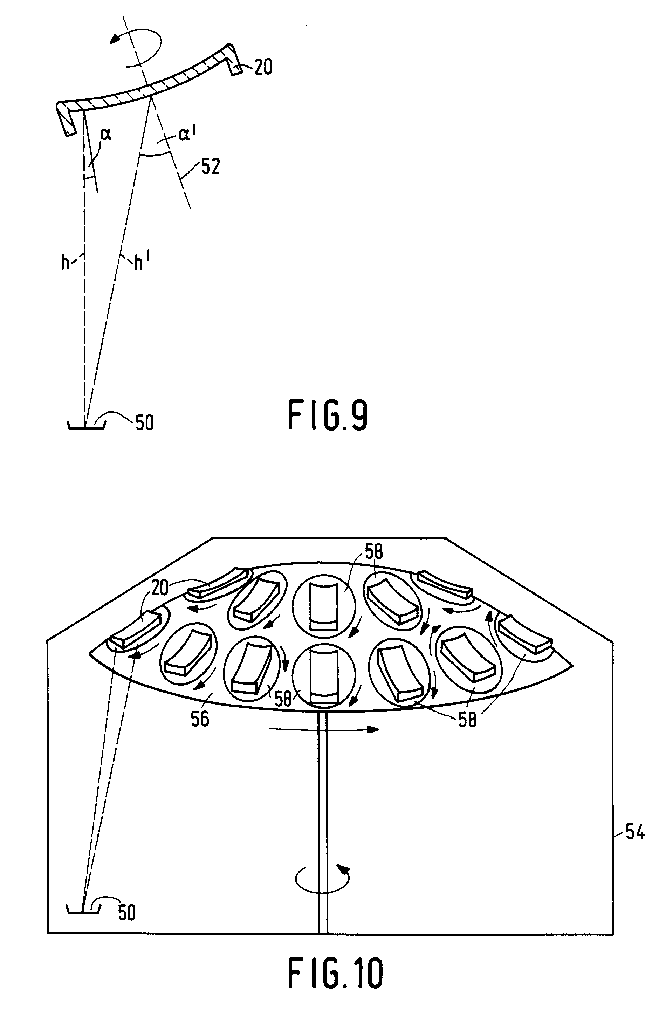

In Figure 8 the continuous line illustrates the illumination E of a projection screen plotted against the radial distance from the centre, for a system having a projection display tube with a faceplate having a diagonal of 125 mm and a spherically curved screen of radius of curvature 350 mm and a lens having a NA = 0.450 and a focal length of 90 mm. The illumination E has a high value at the centre rs = 0 which corresponds to a filter cut-off angle of 32° ($\lambda_f$ = 677) and also a high corner illumination which corresponds to a filter cut-off angle of 46° ($\lambda_f$ = 706 mm). For comparison, the lower curve with open circles gives the illumination without an interference filter.

It is possible to improve the corner illumination by reducing the radius of curvature (rc) of the faceplate 20 to say 200 mm from say 350 mm. However, reducing the radius of curvature causes problems with evaporation of the filter layers, with sedimenting the phosphor material, with more pronounced defocusing of the electron beam in the projection television cathode ray tube, requiring dynamic correction to obtain a sharp image, and with raster distortion.

The evaporation of filters, having increasing thickness of layers towards the corners onto convex curved faceplates has involved the development of techniques which go beyond those used in evaporating even thickness layers onto concave curved or flat substrates.

Figure 9 illustrates diagrammatically one method of evaporation by which a smooth increase in the thickness of a filter from the centre to the corner can be achieved. The essence of this evaporation method lies in obliquely evaporating the filter layer material onto the internal surface of a curved faceplate 20. The faceplate is so disposed relative to a pair of evaporated sources 50 that the distance h to the adjacent edge of the faceplate is substantially less than the distance h' to the centre of the faceplate. Consequently less material is evaporated at the centre than at the edge. Rotating the faceplate about its axis 52 will ensure circularly symmetric deposition over the entire area of the faceplate, with still a thicker filter layer near the corners because the deposition of filter material is proportional to cos $\alpha/h^2$, which averaged over the rotations may yield a higher value than cos $\alpha'/h'^2$.

Method by which this technique can be implemented is illustrated diagrammatically in Figure 10. In a known planetary type of evaporation apparatus the substrates onto which layers are to be evaporated are mounted on a calotte 56 rotatably mounted inside a vacuum chamber 54. In order to evaporate variable thickness layers in accordance with the technique described with reference to Figure 9, the calotte 56 is constructed so that it comprises a plurality of turntables 58 each of which is rotatable about its own axis. The faceplates 20 are placed convex face downwards onto its respective turntable 58. The evaporation sources 50 are positioned off-axis so that the material evaporated from the evaporation source lands obliquely on the rotating substrates. By using the turntables 58 which have a planetary rotation with respect to that of the calotte 56, a plurality of faceplates can be treated batchwise during any one pump down of the vacuum chamber 54.

Disadvantages of this method are that the construction of the planetary system is more complicated than one without separate turntables 58 and that the provision of the turntables 58 means that the number of faceplates in a batch which can be processed is about 50% to 60% of the number which can be processed using a calotte without turntables. Oblique evaporation also produces less dense, more porous layers which are prone to suffer more from crazing when subsequently annealed, compared to layers which are evaporated substantially perpendicularly onto the substrate surface.

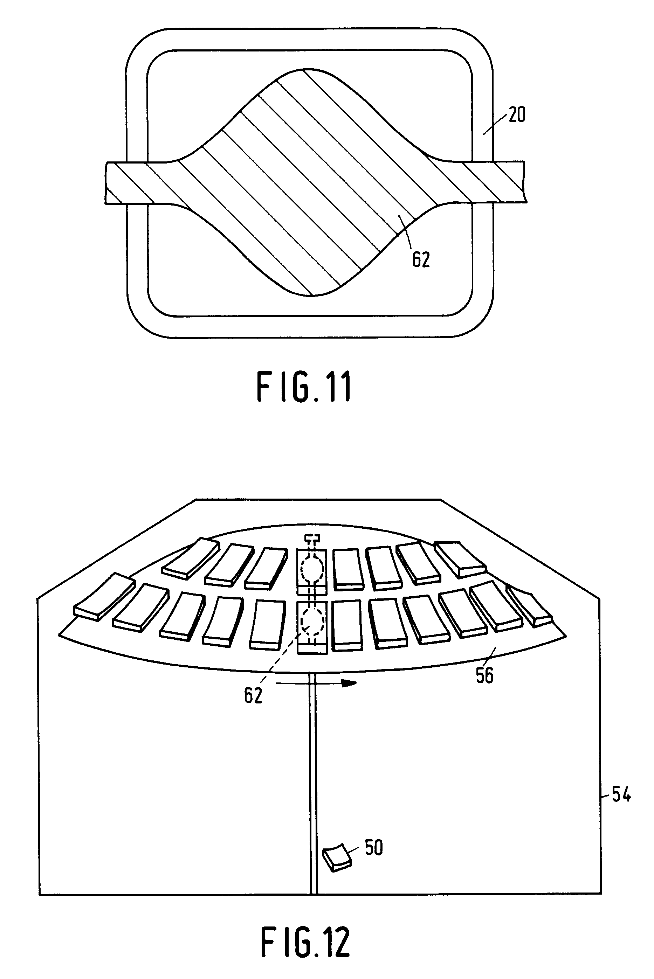

A simpler method which avoids the abovementioned problems but provides an acceptable variation in the layer thicknesses between the centre and the corners of a faceplate makes use of the fact that the faceplates are rectangular with a 3:4 or 3:5 or 9:16 aspect ratio and are not circularly symmetrical. Referring to Figure 11 if the central portion of the faceplate 20 is covered intermittently by a masking member 62, then the peripheral areas of the faceplate surface remain exposed more continuously so that more material is deposited thereon than at the centre.

Figure 12 is a diagram of an apparatus for applying this method. In a vacuum chamber 54 a rotatable calotte 56 provides support for a plurality of substantially rectangular faceplates 20, possibly with rounded corners. The calotte 56 has substantially rectangular apertures therein which are so oriented that the longer x-axes of the faceplates lie along imaginary radial lines extending from the top of the calotte 56. For a medium size evaporation apparatus there are two rings of apertures, for a larger size evaporation apparatus it will be advantageous to use three rings of apertures to accommodate a substantially larger number of faceplates. In operation the calotte 56 is rotated about its axis. The evaporation sources 50 are so disposed beneath the underside of the calotte 56 that evaporated particles are incident on the faceplates perpendicularly or at a sufficiently small angle relative to a normal to the faceplate surface, for example smaller than 15 degrees, that a succession of dense layers is built-up on the faceplate surface. A non-rotatably mounted, radially extending, masking member 62 is arranged between the evaporation sources 50 and the underside of the calotte 56 in order to modify the thickness variation due to evaporation on convexly curved faceplates 20. The precise shape of the masking member 62 is determined partly by geometric calculations based on the wanted thickness variation and based on known angular distributions of the evaporated filter materials and partly empirically. One has a choice to make use of either one masking member which simultaneously corrects for the non-homogeneous angular distribution of the evaporated material and which gives the desired thickness variation for each filter, or two masking members one for correcting the non-homogeneous angular distribution and one for the thickness variation.

Under normal perpendicular evaporation on to an unmasked convex faceplate there will be a thickness decrease towards the corners. This variation is opposite to what is desired for producing an increase in the cut-off angles at the corners of the mask.

Assuming that the evaporation sources 50 are disposed 850 mm from (below) the centre of a faceplate having a spherically curved internal surface with a radius of curvature of 350 mm, a length (in the x-direction) of 100 mm and a width (in the y-direction) of 75 mm, then the thickness of the layers can be calculated using the following relationship:

$$\text{Amount of material deposited} \propto \frac{\text{cosine } \alpha}{(\text{Evaporation distance})^2}$$

The angle $\alpha$ is the sum of the angle of curvature of the surface and the angle between the evaporation source (the electron gun) and the relevant point on the faceplate. For the centre this latter angle is zero. In the case of the mask exemplified above and assuming that the x-axis and y-axis intersect at the centre, than for an unmasked faceplate the following thickness variations relative to the centre have been calculated.

| Ends of y-axis ($y_{max}$) | 1.8% thinner. |
| Ends of x-axis ($x_{max}$) | 3.2% thinner. |
| Corners (ends of diagonals) | 5.0% thinner. |

Using an exemplary masking of the central area of the faceplate, then the following changes were achieved, reference being made to the relative thickness at the centre:

| Ends of y-axis ($y_{max}$) | No change | 1.8% thinner. |
| Ends of x-axis ($x_{max}$) | 7% gain in thickness. | Net 3.8% thicker. |
| Corners (ends of diagonals) | 7% gain in thickness. | Net 2% thicker. |

Some tolerancing on these thicknesses is possible but the amount of the tolerancing and its thinner/thicker range relative to the centre differ depending on the distance to the centre. By way of example at the centre the tolerance is ± 1% at y max the tolerance margins can be greater, between -2% and +2% relative to the centre, at x max the tolerance region is +1% to +4,5% and at the end of the diagonal in the corners the tolerance is +1% to +6%. To avoid misunderstanding, the thickness tolerance is related to the nominal thickness at the centre so that a tolerance figure of +1% to +6% means the corner thickness must be at least 1% thicker than at the centre but not exceed 6% greater than at the centre. If one departs from the tolerance ranges then the cut-off angles obtained may lead to an inbalance in the contributions between the small angle and wide angle light towards the gain. In general the further one gets away from the centre the less the contribution to the gain from the small angle light (near 0 degrees) and the greater the contribution from the wider angle light (near 35 to 50 degrees) and vice versa.

If desired the shape of the convex internal surface of the faceplate 20 may be aspherical rather than spherical. In one embodiment the aspherical surface may have a larger curvature, that is a smaller radius of curvature, near the centre of the faceplate and a smaller or substantially no curvature at larger distances from the centre, particularly in the proximity of the corners. The variation in the thickness of the filter layers, relative to their thickness at the centre, is such that the thickness at the ends of the y-axis (y max) is smaller than at the centre and the thickness at the ends of the x-axis (x max) and at the ends of the diagonals is greater than at the centre. Also the layer thickness at the ends of the diagonals is less than the thickness at x max but greater than at the centre. In an embodiment of an aspherical faceplate the curvature near the centre is close to or equal to 350 mm (radius) and increases (or becomes less curved) at larger distances from the centre, ending with a curvature between 500 mm (radius) and infinity (flat) in the corners. From the point of view of depositing the filter layers a preferred example of an aspherical faceplate for a projection television tube with about a 3"(75 mm) x 4"(100 mm) scanned phosphor area has a spherically curved central portion having a radius of curvature between 300 and 400 mm, for example 350 mm, and extending 35 to 45 mm from the centre of the faceplate and thereafter the remaining area has a substantially infinite curvature, without any discontinuity by using the tangent to the curved part of the faceplate at the transition point.

Another form of an aspherical faceplate which has advantages from an optical point of view has a central region having a large radius of curvature and an outer region having a smaller radius of curvature.

Interference filters having a predetermined variation in cut-off angles have been found to have a superior optical performance when used with short focal length (between 0.5 to 0.75 times the diagonal of the scanned phosphor are a of the faceplate) lenses compared to filters having a constant cut-off angle. Also by being able to produce the filters using a substantially perpendicular evaporation method will mean that the layers will be dense, have a small porosity, and will exhibit little or no crazing after tube processing.

Although the present invention has been described with reference to a terbium activated green phosphor, it is to be understood that the invention can be utilised with other green phosphors as well as with known blue and red luminescing phosphors which are suitable for use in projection colour television tubes.

When the filter thickness increases in both the x- and y-directions, that is radially symmetrically, substantially no colour change occurs over the whole projection screen. When the filter thickness increases only in the x-direction, as in the described and illustrated embodiments of the present invention, the thickness variation can be chosen such that substantially no colour correction is required in the x-direction, that is, along the lines. The resulting colour variation along the y-direction can either be accepted or be corrected by a low-frequency electronic adjustment of the electron beam currents in one or more of the red, green and blue projection television cathode ray tubes. For instance, use can be made of a parabolic collection at the field frequency.

**Claims**

1. A projection television display tube (14) comprising an envelope having an optically transparent faceplate (20), the internal surface of the faceplate being convex as viewed from the interior of the envelope, a cathodoluminescent screen (30) on the internal surface of the faceplate and a multilayer interference filter (46) between the cathodoluminescent screen and the faceplate,
   the filter comprising at least 6 layers each having at its centre an optical thickness nxd, wherein n is the refractive index of the material of the layer and d is the thickness, the optical thickness of the individual layers being between $0.2\lambda_f$ and $0.3\lambda_f$, the average optical thickness throughout the multilayer stack being $0.25\lambda_f$, wherein $\lambda_f$ is equal to p x $\lambda$, where $\lambda$ is the desired central wavelength which is selected from the spectrum emitted by the luminescent material and p is a number between 1.18 and 1.32, characterized in that the cut-off angle is greater at the corners than at the centre.

2. A projection television display tube as claimed in claim 1, characterized in that the optical thickness, hence p and $\lambda$, of each of the filter layers is greater at the corners than at the centre.

3. A projection television display tube as claimed in claim 2, characterized in that the optical thickness of each of the layers increases progressively from the centre to the corners.

4. A projection television display tube as claimed in claim 2, characterized in that the thickness d of each of the layers is greater at the corners than at the centre.

5. A projection television display tube as claimed in claim 4, characterized in that the refractive index of the material of each of the layers is substantially constant.

6. A projection television display tube as claimed in claim 4, characterized in that the refractive index of the material of each of the layers at the centre is slightly different to that at the corners.

7. A projection television display tube as claimed in claim 4, characterized in that the faceplate has a substantially rectangular profile and the layer thickness at the ends of the shorter y-axis (y max) is less than at the centre and the layer thickness at the end of the longer x-axis (x max) is greater than at the centre.

8. A projection television display tube as claimed in claim 7, characterized in that the internal surface of the faceplate is spherical and the layer thickness at the ends of the diagonals is less than the thickness at x max.

9. A projection television display tube as claimed in claim 8, characterized in that the spherical surface has a radius of curvature of substantially 350 mm.

10. A projection television display tube as claimed in claim 1, characterized in that the internal surface of the faceplate is aspherical.

11. A projection television display tube as claimed in claim 10, characterized in that the radius of curvature of the internal surface is larger at a central region than at the outer region.

12. A projection television tube as claimed in claim 7, characterized in that the internal surface is aspherical and has a larger curvature near the centre of the faceplate and a smaller or substantially no curvature at larger distances from the centre, particularly in the proximity of the corners and wherein the layer thickness at the ends of the diagonals is less than the thickness at x max.

13. A projection television display tube as claimed in claim 12, characterized in that the aspherical surface has a curvature close to or equal to 350 mm near the centre of the faceplate and becomes less curved

EP 0 271 165 B1

at larger distances from the centre, ending with a curvature between 500 mm and infinity in the corners.

**14.** A projection television display tube as claimed in claim 12, characterized in that the central region of the faceplate is spherical with a radius of curvature between 300 and 400 mm, the region beyond the central region is substantially conical having an infinite radius of curvature, and the conicai region extends tangentially from the central spherical region.

**15.** A projection television display tube as claimed in claim 1, characterized in that the interference filter comprises at least 9 layers.

**16.** A projection television display tube as claimed in claim 15, characterized in that the interference filter has between 14 and 30 layers.

**17.** A projection television display system including three projection television display tubes (14) respectively having cathodoluminescent screens (30) luminescing in different colours, focusing lens means (16) associated with each display tube and a viewing screen (12) on which the images on the display screens are merged to form a multicoloured image, wherein each tube has a faceplate (20) which is convex as viewed from inside the envelope, the projection television system comprising at least one projection television display tube as claimed in any of the claims 1 to 16.

**18.** A projection television display system as claimed in claim 17, characterized in that the focusing lens means (16) has a focal length of less than 100 mm.

**19.** A projection television display system as claimed in claim 17 or 18, characterized in that f + 10000/rc < D where f is the focal length of the lens means, rc is the radius of curvature of the faceplate and D is the diagonal or diameter of the scanned phosphor area, f, rc an D being in millimetres.

**20.** A method of producing a multilayer interference filter onto a convex surface of a substantially rectangular faceplate (20) for a projection television display tube, the cut-off angle of the interference filter (46) varying with increasing distance to the centre of the faceplate and being greater at the corners than at the centre, the thickness of each layer of the multilayer interference filter being greater at the corners than at the centre, said method comprising mounting the faceplate (20) on a rotatable calotte (56), evaporating a filter material at angles smaller than ± 15° to the perpendicular to the convex surface onto the faceplate (20), the calotte (56) being rotated, and varying the deposition of evaporated material onto the faceplate by selectively masking so that the layer thickness increases with increasing x, with x = O at the centre of the faceplate.

**21.** A method as claimed in claim 20, characterized in that a predetermined area of the convex surface of the faceplate is masked intermittently by at least one shield as the faceplate (20) is rotated relatively to the evaporation source (50).

**22.** A method as claimed in claim 20 or 21, characterized in that the calotte (56) is concave viewed from the evaporation source (50) and the or each faceplate (20) is disposed with its longer axis substantially radially of the calotte.

**23.** A method of producing a multilayer interference filter on a convex surface of a substantially rectangular faceplate (20) for a projection television display tube, the cut-off angle of the interference filter (46) varying with increasing distance to the centre of the faceplate and being greater at the corners than at the centre, the thickness of each layer of the multilayer interference filter being greater at the corners than at the centre, said method comprising obliquely evaporating a filter material onto the convex surface of the faceplate (20) as it is rocked substantially continuously, the distance from the evaporation source (50) to the centre of the faceplate being greater than that to the adjacent corner of the faceplate, the faceplate (20) being rotated in planetary manner relative to the evaporation source (50).

**Patentansprüche**

**1.** Projektionsfernseh-Bildwiedergaberöhre (14) mit einem Kolben, der eine optisch transparente Vorderplatte (20), deren Innenfläche, von der Innenseite des Kolbens aus gesehen, konvex ist, einen

10

Kathodolumiszenzschirm (30) auf der Innenfläche der Vorderplatte und ein Mehrschicht-Interferenzfilter (46) zwischen dem Kathodolumineszenzschirm und der Vorderplatte enthält, wobei das Filter wenigstens 6 Schichten mit je einer optischen Dicke nxd in der Mitte enthält, worin n der Brechungsindex des Schichtmaterials und d die Dicke sind, die optische Dicke der einzelnen Schichten zwischen 0,2 $\lambda_f$ und 0,3 $\lambda_f$ liegt, die mittlere optische Dicke im ganzen Mehrschichtstapel 0,25 $\lambda_f$ beträgt, worin $\lambda_f$ gleich p x $\lambda$ ist, worin $\lambda$ die verlangte Zentralwellenlänge ist, die aus dem vom Leuchtstoff ausgesandten Spektrum gewählt wird, und p eine Zahl zwischen 1,18 und 1,32 ist, dadurch gekennzeichnet, daß der Anschnittwinkel in den Ecken größer ist als in der Mitte.

2. Projektionsfernseh-Bildwiedergaberöhre nach Anspruch 1, dadurch gekennzeichnet, daß die optische Dicke, und also p und $\lambda$, jeder der Filterschichten in den Ecken größer ist als in der Mitte.

3. Projektionsfernseh-Bildwiedergaberöhre nach Anspruch 2, dadurch gekennzeichnet, daß die optische Dicke jeder der Schichten von der Mitte nach den Ecken progressiv größer wird.

4. Projektionsfernseh-Bildwiedergaberöhre nach Anspruch 2, dadurch gekennzeichnet, daß die Dicke d jeder der Schichten in den Ecken größer ist als in der Mitte.

5. Projektionsfernseh-Bildwiedergaberöhre nach Anspruch 4, dadurch gekennzeichnet, daß der Brechungsindex des Materials jeder der Schichten im wesentlichen konstant ist.

6. Projektionsfernseh-Bildwiedergaberöhre nach Anspruch 4, dadurch gekennzeichnet, daß der Brechungsindex des Materials jeder der Schichten in der Mitte etwas abweixcht von dem in den Ecken.

7. Projektionsfernseh-Bildwiedergaberöhre nach Anspruch 4, dadurch gekennzeichnet, daß die Vorderplatte ein im wesentlichen rechteckiges Profil hat und die Schichtdicke an den Enden der kürzeren y-Achse (y max) geringer ist als in der Mitte, und die Schichtdicke am Ende der längeren x-Achse (x max) größer ist als in der Mitte.

8. Projektionsfernseh-Bildwiedergaberöhre nach Anspruch 7, dadurch gekennzeichnet, daß die Innenfläche der Vorderplatte sphärisch ist und die Schichtdicke an den Enden der Diagonale geringer ist als die Dicke bei x max.

9. Projektionsfernseh-Bildwiedergaberöhre nach Anspruch 8, dadurch gekennzeichnet, daß die sphärische Oberfläche einen Krümmungsradius im wesentlichen von 350 mm hat.

10. Projektionsfernseh-Bildwiedergaberöhre nach Anspruch 1, dadurch gekennzeichnet, daß die Innenfläche der Vorderplatte asphärisch ist.

11. Projektionsfernseh-Bildwiedergaberöhre nach Anspruch 10, dadurch gekennzeichnet, daß der Krümmungsradius der Innenfläche in einem Zentralgebiet größer ist als im Außengebiet.

12. Projektionsfernseh-Bildwiedergaberöhre nach Anspruch 7, dadurch gekennzeichnet, daß die Innenfläche asphärisch ist und nahe bei der Mitte der Vorderplatte eine größere Krümmung hat und in größeren Abständen von der Mitte eine geringere oder im wesentlichen gar keine Krümmung aufweist, insbesondere in der Nähe der Ecken, und wobei die Schichtdicke an den Ende der Diagonalen geringer ist als die Dicke bei x max.

13. Projektionsfernseh-Bildwiedergaberöhre nach Anspruch 12, dadurch gekennzeichnet, daß die asphärische Oberfläche eine Krümmung nahe bei oder gleich 350 mm nahe bei der Mitte der Vorderplatte hat und in größeren Abständen von der Mitte weniger gekrümmt ist und in eine Krümmung zwischen 500 mm und unendlich in den Ecken ausläuft.

14. Projektionsfernseh-Bildwiedergaberöhre nach Anspruch 12, dadurch gekennzeichnet, daß das Zentralgebiet der Vorderplatte sphärisch mit einem Krümmungsradius zwischen 300 und 400 mm ist, wobei das Gebiet vorbei dem Zentralgebiet im wesentliche konisch ist mit einem unendlichen Krümmungsradius, und das Konusgebiet sich tangential vom zentralen sphärischen Gebiet erstreckt.

11

**15.** Projektionsfernseh-Bildwiedergaberöhre nach Anspruch 1, <u>dadurch gekennzeichnet</u>, daß das Interferenzfilter wenigstens 9 Schichten enthält.

**16.** Projektionsfernseh-Bildwiedergaberöhre nach Anspruch 15, <u>dadurch gekennzeichnet</u>, daß die Zahl der Schichten des Interferenzfilters zwischen 14 und 30 liegt.

**17.** Projektionsfernseh-Bildwiedergabeanordnung mit drei Projektionsfernseh-Bildwiedergaberöhren (14) mit je in verschiedenen Farben leuchtenden Kathodolumineszenzschirmen (30), einem Sammellinsenmittel (16) in Zusammenarbeit mit jeder Bildwiedergaberöhre und einem Bildschirm (12), auf dem die bilder an den Wiedergabeschirmen zur Bildung eines Mehrfarbenbildes gemischt werden, wobei jede Röhre eine Vorderplatte (20) enthält, die, von der Innenseite des Kolbens gesehen, konvex ist, und die Projektionsfernseh-Bildwiedergabeanordnung wenigstens eine Projektionsfernseh-Bildwiedergaberöhre nach einem oder mehreren der Ansprüche 1 bis 16 enthält.

**18.** Projektionsfernseh-Bildwiedergabeanordnung nach Anspruch 17, <u>dadurch gekennzeichnet</u>, daß das Sammellinsenmittel (16) eine Brennweite von weniger als 100 mm hat.

**19.** Projektionsfernseh-Bildwiedergabeanordnung nach Anspruch 17 oder 18, <u>dadurch gekennzeichnet</u>, daß f + 10.000/rc < D beträgt, worin f die Brennweite des Linsenmittels, rc der Krümmungsradius der Vorderplatte und D die Diagonale oder der Durchmesser des abgetasteten Leuchtfeldes sind, wobei f, rc und D Millimeterwerte sind.

**20.** Verfahren zum Erzeugen eines Mehrschicht-Interferenzfilters auf einer konvexen Oberfläche einer im wesentlichen recheckigen Vorderplatte (20) für eine Projektionsfernseh-Bildwiedergaberöhre, wobei der Anschnittwinkel des Intrerferenzfilters (46) sich mit wachsendem Abstand von der Mitte der Vorderplatte ändert, und in den Ecken größer ist als in der Mitte, die Dicke jeder Schicht des Mehrschichtfilters in den Ecken größer ist als in der Mitte, und das Verfahren das Anbringen der Vorderplatte (20) auf einer drehbaren Kalotte (56), das Verdampfen eines Filtermaterials unter kleineren Winkeln als ±15° gegen die Senkrechte auf die Konvexfläche auf der Vorderplatte (20) bei drehender Kalotte (56), und das Ändern der Abscheidung verdampften Materials auf der Vorderplatte durch selektives Maskieren umfaßt, so daß die Schichtdicke bei ansteigendem x größer wird, und x = 0 in der Mitte der Vorderplatte ist.

**21.** Verfahren nach Anspruch 20, <u>dadurch gekennzeichnet</u>, daß ein vorgegebenes Feld der Konvexfläche der Vorderplatte intermittierend von wenigstens einem Schild maskiert wird, wenn die Vorderplatte (20) in bezug auf die Verdampfungsquelle gedreht wird.

**22.** Verfahren nach Anspruch 20 oder 21, <u>dadurch gekennzeichnet</u>, daß die Kalotte (56), von der Verdampfungsquelle (50) aus gesehen, konkav ist, und die oder jede Vorderplatte (20) mit ihrer längeren Achse im wesentlichen radial in bezug auf die Kalotte angeordnet ist.

**23.** Verfahren zum Erzeugen eines Mehrschicht-Interferenzfilters auf einer Konvexfläche einer im wesentlichen rechteckigen Vorderplatte (20) für eine Projektionsfernseh-Bildwiedergaberöhre, wobei der Anschnittwinkel des Interferenzfilters (46) sich mit größer werdendem Abstand von der Mitte der Vorderplatte ändert, und in den Ecken größer ist als in der Mitte, die Dicke jeder Schicht des Mehrschicht-Interferenzfilters in den Ecken größer ist als in der Mitte, und das Verfahren das schräge Aufdampfen eines Filtermaterials auf der Konvexfläche der Vorderplatte (20 während im wesentlichen ununterbrochenem Schwingen umfaßt, der Abstand von der Verdampfungsquelle (50) zur Mitte der Vorderplatte größer ist als der zur benachbarten Ecke der Vorderplatte, und die Vorderplatte (20) in bezug auf die Verdampfungsquelle (50) auf die Weise der Planetenbewegung gedreht wird.

## Revendications

**1.** Tube image de télévision à projection (14) comprenant une enveloppe ayant une dalle (20) optiquement transparente, la surface interne de la dalle étant convexe vue de l'intérieur de l'enveloppe, un écran cathodoluminescent (30) sur la surface interne de la dalle et un filtre interférentiel multicouche (46) entre l'écran cathodoluminescent et la dalle, le filtre comprenant au moins 6 couches ayant chacune, au centre, une épaisseur optique nxd, où n est l'indice de réfraction de la matière de la

EP 0 271 165 B1

couche et d est l'épaisseur, l'épaisseur optique des couches individuelles étant comprise entre 0,2 $\lambda_f$ et 0,3 $\lambda_f$, l'épaisseur optique moyenne dans toute la pile de couches multiples étant de 0,25 $\lambda_f$, où $\lambda_f$ est égal à p x $\lambda$, où $\lambda$ est la longueur d'onde centrale souhaitée qui est choisie dans le spectre émis par la matière luminescente et p est un nombre compris entre 1,18 et 1,32, caractérisé en ce que l'angle de coupure est plus grand aux coins qu'au centre.

2. Tube image de télévision à projection selon la revendication 1, caractérisé en ce que l'épaisseur optique, en l'occurrence, p et $\lambda$, de chacune des couches de filtrage est plus grande dans les coins qu'au centre.

3. Tube image de télévision à projection selon la revendication 2, caractérisé en ce que l'épaisseur optique de chacune des couches augmente progressivement du centre vers les coins.

4. Tube image de télévision à projection selon la revendication 2, caractérisé en ce que l'épaisseur d de chacune des couches est plus grande dans les coins qu'au centre.

5. Tube image de télévision à projection selon la revendication 4, caractérisé en ce que l'indice de réfraction de la matière de chacune des couches est sensiblement constant.

6. Tube image de télévision à projection selon la revendication 4, caractérisé en ce que l'indice de réfraction de la matière de chacune des couches au centre est légèrement différent de celui des coins.

7. Tube image de télévision à projection selon la revendication 4, caractérisé en ce que la dalle a un profil sensiblement rectangulaire et l'épaisseur des couches aux extrémités de l'axe y plus court (y max) est moindre qu'au centre et l'épaisseur des couches à l'extrémité de l'axe des x long (x max) est plus élevée qu'au centre.

8. Tube image de télévision à projection selon la revendication 7, caractérisé en ce que la surface interne de la dalle est sphérique et l'épaisseur des couches aux extrémités des diagonales est inférieure à l'épaisseur en x max.

9. Tube image de télévision à projection selon la revendication 8, caractérisé en ce que la surface sphérique a un rayon de courbure qui est sensiblement de 350 mm.

10. Tube image de télévision à projection selon la revendication 1, caractérisé en ce que la surface interne de la dalle est asphérique.

11. Tube image de télévision à projection selon la revendication 10, caractérisé en ce que le rayon de courbure de la surface interne est plus grand dans la région centrale que dans la région extérieure.

12. Tube image de télévision à projection selon la revendication 7, caractérisé en ce que la surface interne est asphérique et présente une courbure plus forte à proximité du centre de la dalle et une courbure moins forte ou sensiblement nulle à des distances plus grandes du centre, en particulier à proximité des coins, l'épaisseur des couches aux extrémités des diagonales étant inférieure à l'épaisseur en x max.

13. Tube image de télévision à projection selon la revendication 12, caractérisé en ce que la surface asphérique a une courbure proche de 350 mm ou égale à celle-ci au voisinage du centre de la dalle et devient moins courbe à des distances plus grandes du centre, pour terminer par une courbure comprise entre 500 mm et l'infini dans les coins.

14. Tube image de télévision à projection selon la revendication 12, caractérisé en ce que la région centrale de la dalle est sphérique avec un rayon de courbure entre 300 et 400 mm, la région au-delà de la région centrale est sensiblement conique avec un rayon de courbure infini et la région conique s'étend tangentiellement à partir de la région sphérique centrale.

15. Tube image de télévision à projection selon la revendication 1, caractérisé en ce que le filtre interférentiel comprend au moins 9 couches.

13

**16.** Tube image de télévision à projection selon la revendication 15, caractérisé en ce que le filtre interférentiel comprend entre 14 et 30 couches.

**17.** Système d'affichage de télévision à projection comprenant trois tubes image de télévision à projection (14) ayant respectivement des écrans cathodoluminescents (30) à luminescence dans différentes couleurs, un moyen à lentille de focalisation (16) associé à chaque tube image et un écran de visualisation (12) sur lequel les images sur les écrans d'affichage sont fusionnées pour former une image multicolore, dans lequel chaque tube comporte une dalle (20) qui est convexe lorsqu'on l'observe de l'intérieur de l'enveloppe, le système de télévision à projection comprenant au moins un tube image de télévision à projection selon l'une quelconque des revendications 1 à 16.

**18.** Système d'affichage de télévision à projection selon la revendication 17, caractérisé en ce que le moyen à lentille de focalisation (16) a une distance focale inférieure à 100 mm.

**19.** Système d'affichage de télévision à projection selon la revendication 17 ou 18, caractérisé en ce que f + 10 000/rc < D où f est la distance focale du moyen à lentille, rc est le rayon de courbure de la dalle et D est la diagonale ou le diamètre de l'aire de luminphores balayée, f, rc et D étant en millimètres.

**20.** Procédé de production d'un filtre interférentiel multicouche sur une surface convexe d'une dalle sensiblement rectangulaire (20) pour un tube image de télévision à projection, l'angle de coupure du filtre interférentiel (46) variant à mesure que l'on s'aligne du centre de la dalle et étant plus élevé dans les coins qu'au centre, l'épaisseur de chaque couche du filtre interférentiel multicouches étant plus élevée dans les coins qu'au centre, le procédé consistant à monter la dalle (20) sur une calotte tournante (56), à faire évaporer une matière de filtrage à des angles inférieurs à ± 15° par rapport à la perpendiculaire à la surface convexe sur la dalle (20), la calotte (56) étant mise en rotation, et à faire varier le dépôt de la matière évaporée sur la dalle par un masquage sélectif, de telle sorte que l'épaisseur des couches augmente lorsque x augmente, x étant égal à zéro au centre de la dalle.

**21.** Procédé selon la revendication 20, caractérisé en ce qu'une aire prédéterminée de la surface convexe de la dalle est masquée de manière intermittente par au moins un écran lorsque la dalle (20) est tournée par rapport à la source d'évaporation (50).

**22.** Procédé selon la revendication 20 ou 21, caractérisé en ce que la calotte (56) est concave lorsqu'on l'observe depuis la source d'évaporation (50) et la ou chaque dalle (20) est disposée avec son axe long sensiblement radial par rapport à la calotte.

**23.** Procédé de production d'un filtre interférentiel multicouche sur une surface convexe d'une dalle sensiblement rectangulaire (20) pour un tube image de télévision à projection, l'angle de coupure du filtre interférentiel (46) variant à mesure que l'on augmente la distance du centre de la dalle et étant plus élevé dans les coins qu'au centre, l'épaisseur de chaque couche du filtre interférentiel multicouche étant plus élevée dans les coins qu'au centre, le procédé consistant à évaporer en oblique une matière de filtrage sur la surface convexe de la dalle (20), tandis qu'elle oscille en substance sans interruption, la distance séparant la source d'évaporation (50) du centre de la dalle étant plus grande que celle qui va jusqu'au coin adjacent de la dalle, la dalle (20) étant mise en rotation de manière planétaire par rapport à la source d'évaporation (50).

14

FIG.1

FIG.2

46

48

30 L' H    H L H

# FIG.3

28

48

30

46

20

# FIG.4

FIG.5

FIG.6

FIG.7

FIG.8

FIG.9

FIG.10

20

# FIG.11

# FIG.12